# EUROPEAN PATENT APPLICATION

(11) **EP 1 079 531 A2**
(43) Date of publication of application: **28.02.2001**
(21) Application number: 00115061.4
(22) Date of filing: 26.07.2000
(51) Int. Cl.: H04B 1/28

(54) **Integrated semicondutor circuit for processing receiving signals**

(30) Priority: 04.08.1999 JP 22074399
(71) Applicant: Hitachi Europe GmbH, 40547 Düsseldorf (DE)
(72) Inventor: Yokota, Masakatsu, Takasaki-shi, Gunma prefecture (JP); Watanabe, Kazuo, Takasaki-shi, Gunma prefecture (JP); Feneberg, Marcus, 83064 Raubling (DE); Politz, Volker, 84424 Isen (DE)
(74) Representative: Beetz & Partner Patentanwälte

(57) **Abstract**

The invention relates to an integrated semiconductor circuit for the signal processing of receiving signals in two or more frequency bands (VHF; L-band) on one common circuit A. The circuit is capable of composing a small-sized electronic equipment with a reduced number of parts therein, and realizes the same with low power consumption without requirement for a high voltage power source.
In a signal processing on one common circuit which handles signals in two or more frequency bands (VHF; L-band) different from each other, signals are processed with frequency conversion means (131, 141) which convert signals in a lower frequency band VHF into a higher frequency band (up-converting) among frequency bands desired to be handled.

## Description

### DESCRIPTION OF THE INVENTION

### TECHNICAL FIELD OF THE INVENTION

The present invention relates to a wireless communications technology particularly to a useful technique for receiving and processing signals in a plurality of frequency bands; said technique is usefully applied to, for example, an integrated semiconductor circuit for receiving signal processing in a terminal equipment which composes a part of DAB (Digital Audio Broadcasting) system that handles two frequency bands, L-band and VHF-band.

### PRIOR ART

A DAB system uses two frequency bands, one 1,452 - 1,492 MHz in L-band and the other 174 - 245 MHz in VHF-band. Therefore, terminal equipment like portable telephones and personal computers are required to have a circuit capable of processing or handling signals in two frequency bands. When said circuit is provided separately for each frequency band using a semiconductor integrated circuit therein, number of parts in said terminal equipment increases. Particularly in a handheld electronic device like a portable telephone, small sizing and power consumption lowering are vital and reducing number of parts is an important technical object.

For finding out a technique for reducing number of parts in a signal processing circuit of terminal equipment for DAB system which uses two frequency bands L-band and VHF-band, the inventors of the present invention studied a signal processing technique that permits amplification and noise elimination on one common circuit by converting the signal in one frequency band into the signal in the other frequency band. Generally, it is technically easy to process a higher frequency signal down into a lower frequency signal when a signal frequency conversion is desired, and it is a common understanding that a low frequency signal handling circuit consumes less electrical power than a high frequency signal handling circuit.

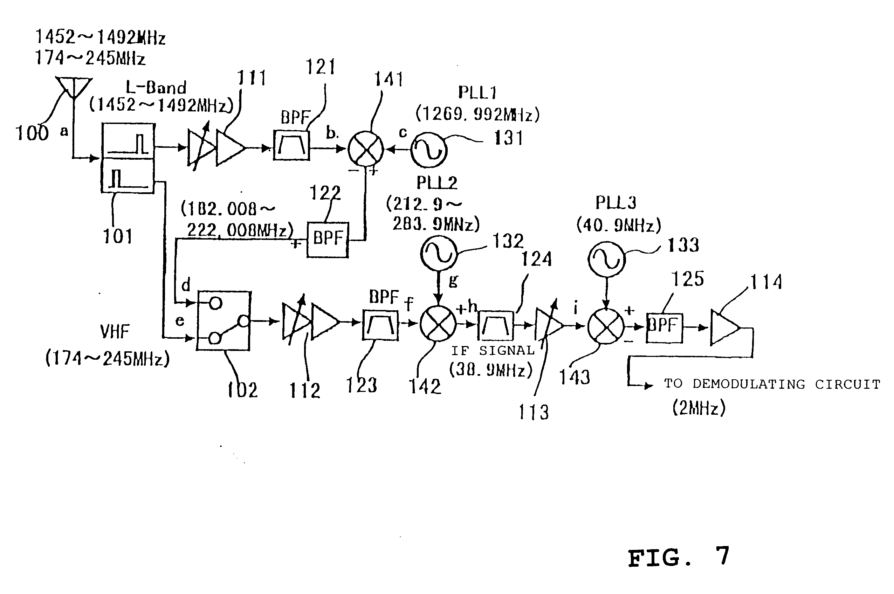

Then, the inventors firstly studied a circuit given in Figure 7, wherein an L-band signal of 1,452 - 1,492 MHz is down-converted into a signal in a frequency band of 174 - 245 MHz close to VHF-band for amplification and noise elimination on one common circuit.

In Figure 7, reference numeral 101 indicates a deplexer (branching filter) which separately extracts L-band signals of 1,452 - 1,492 MHz and VHF-band signals of 174 - 245 MHz form the received signal received by an antenna 100; reference numeral 102 indicates a signal switcher; reference numerals 111, 112, and 114 indicate low-noise amplifiers (LNAs); reference numeral 113 indicates an automatic gain control (AGC) amplifier; reference numerals 121, 122, 123, 124 and 125 indicate band-pass filters; reference numerals 131, 132 and 133 indicate PLL (phase locked loop) circuits which generate pre-determined frequencies as local oscillators; and reference numerals 141, 142 and 143 indicate mixers which combine said received signal and oscillating signals generated from said PLL circuits.

It however should be noted that this circuitry is devised by the inventors for study purpose and is not meant a public known circuitry.

In the system shown in Figure 7, said PLL circuit 131 is composed to generate a local oscillating signal of 1,269.992 MHz; the receiving L-band signal of 1,452 - 1,492 MHz received by said antenna 100 and separately extracted by said deplexer (branching filter) 101 is amplified by said low-noise amplifier 111, and is processed by said band-pass filter 121 for noise elimination, then further is down-converted into the signal on a frequency close to VHF-band by the combining process in a first mixer 141 with said local oscillating signal of 1,269.992 MHz generated from said PLL circuit 131. Said mixers 141 - 143 send out a superposed signal which is an overlay of two frequencies: one equivalent to the sum-frequency of frequencies of said receiving signal and said oscillating signal, the other equivalent to the differential-frequency between said frequencies.

Said receiving L-band signal down-converted by a first mixer 141 is fed to said signal switcher 102 via said band-pass filter 122 in a form of the signal on frequencies of 182.008 - 222.008 MHz equivalent to the differential-frequency between frequencies of said receiving signal and said local oscillating signal. Said signal switcher 102 selectively sends out either said down-converted L-band signal or said VHF-band signal to said low-noise amplifier 112 according to selected mode. The signal amplified by said low-noise amplifier 112 is processed for noise elimination therefrom by said band-pass filter 123, and is converted into an intermediate frequency signal (IF signal) of 38.9 MHz by a second mixer 142 by being combined with a local oscillating signal of 212.9 - 283.9 MHz generated from said PLL circuit 132 for converting. Said converted signal, after being processed for noise elimination therefrom by a narrow-band band-pass filter 124 like a SAW filter, is amplified by said automatic gain control (ACG) amplifier 113 followed by a frequency conversion into a signal on 2 MHz in a third mixer 143 by combining with a local oscillating signal of 40.9 MHz generated from said PLL circuit 133, then is sent out to a demodulating circuit through said band-pass filter 125 and said amplifier 114.

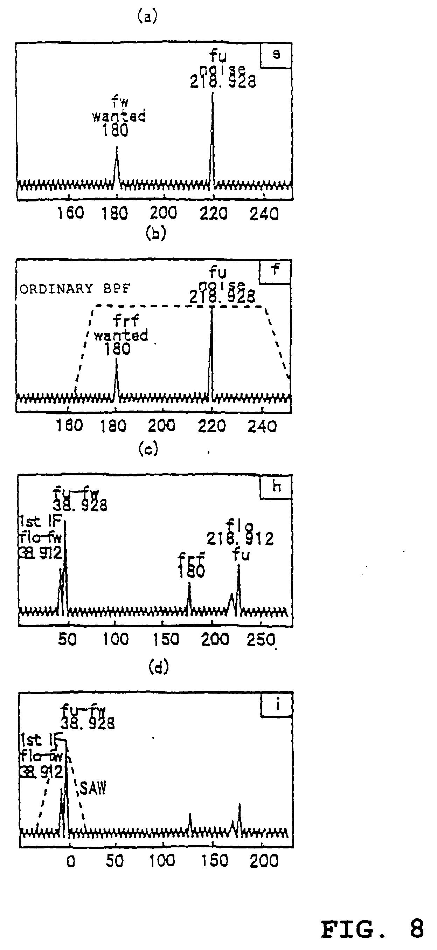

In the down-converting technique shown in Figure 7, when a signal fw on 180 MHz channel in VHF-band is desired to be selected under a circumstance that an undesired signal on the other channel, say a signal fu of 218.928 MHz, exists in the vicinity of said desired signal as shown in Figure 8(a) for example, said undesired signals in the other channel cannot be rejected passing said band-pass filter 123 as long as an ordinary band-pass filter, comprising inductance, capacitance and resistance, is used in said band-pass filter 123. Figure 8(b) shows a case that the level of the signal in a channel not to be selected is greater than the level of the signal in a channel desired for selection. This situation frequently occurs in actual operation of communication systems depending on radio wave conditions of the place wherein communication terminal equipment is in operation.

As a result of this, when a local oscillating signal of frequency flo generated from said PLL circuit 132 is set at 218.912 MHz to convert said signal fw on said 180 MHz channel to be selected into said intermediate frequency IF signal of 38.9 MHz in said second mixer 142, an undesired noise of 38.928 MHz appears additionally to the signal of a desired frequency 1stIF (flo-fw) as shown in Figure 8 (c). This noise is a noise having a frequency equivalent to the frequency-differential fu-fw between a signal fu on 218.928 MHz in the other channel and said signal fw on said 180 MHz channel to be selected. Further, said noise fu-fw has a very close frequency to a signal frequency of 1stIF 38.912 MHz a converted frequency from said signal fw on 180 MHz channel to be selected; this causes a problem that the noise cannot be eliminated, as can be understood from Figure 8(d), even by a SAW filter 124, a narrow-band band-pass filter, placed at the front-end thereof. In Figure 8, signs e, f, h and i appear in upper-right corners of Figure signs (a) - (d) for identification show corresponding signals among signals marked as a - i in the system given in Figure 7.

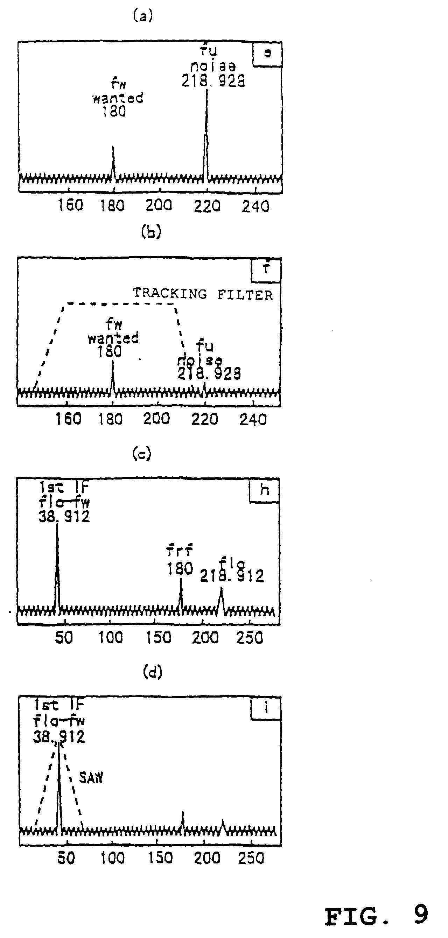

The noise caused from said signal fu in undesired other channel as mentioned above can be eliminated by using a tracking filter, for example, as said band-pass filter 123 placed at the pre-stage to said second mixer 142, because tracking filters can vary their pass-band. Figure 9 shows a signal frequency distribution at each part of the circuit when a tracking filter is used as said band-pass filter 123. Using a tracking filter as said band-pass filter 123 can obtain a signal without said noise fu-fw of 38.928 MHz by shifting its pass-band to the vicinity of 180 MHz channel to be selected as shown in Figure 9(b) to eliminate said signal fu of 218.928 MHz in undesired other channel. This technique, however, still has a problem that number of parts therein becomes increased, because, the tracking filter to be used here should have a sophisticated circuitry containing variable capacitance diodes and many other parts.

In said down-converting technique shown in Figure 7, the oscillating frequency in said PLL circuit 132, which generates a local oscillating signal to be combined with said received signal in said second mixer 142, must be capable of being varied by about 30% of the center frequency of said desired channel in a wide range from 212.9 - 283.9 MHz. This requires the controlling voltage in a voltage controlled oscillator (VCO ) in said PLL circuit 132 to be varied for an extent 0 (zero) to approximately 8 V. Therefore, in the semiconductor integrated circuit which has a signal processing circuitry like the one Figure 7 shows, said circuit must be supplied with an external high voltage power source having 8 V or more, or otherwise, must internally have a voltage boosting circuit for such high voltage. On the other hand, the semiconductor integrated circuit to be used in a handheld electronic device like a portable telephone is required to operate with a low, as much as possible, voltage battery consuming less electrical power. Therefore, it has been revealed that said down-converting technique was unsuitable for the semiconductor integrated circuit to be used in a handheld electronic device.

### OBJECT OF THE INVENTION

An object of the present invention is, even under a requirement that a signal processing is to handle receiving signals in two or more frequency bands on one common circuit, to provide an integrated semiconductor circuit for receiving signal processing which is capable of composing an electronic equipment with reduced number of parts therein and thereby achieving small-sizing.

Another object of the present invention is, even under a requirement that a signal processing is to handle receiving signals in two or more frequency bands on one common circuit, to provide an integrated semiconductor circuit for receiving signal processing without requirement for a high voltage power source, thereby low power consumption is realized.

Said and other objects and novel features of the present invention will become apparent from descriptions in this specification and drawings attached thereto.

### MEANS TO SOLVE THE PROBLEMS

Brief explanations on features of typical means that would appear in the disclosed present invention are as under.

That is, in a signal processing which handles two or more signals in frequency bands different each other using one common circuit, a signal in a lower frequency band is converted into a signal in a higher frequency band (up-converting) among frequency bands desired to be handled.

More concrete explanation is as follows.
In a semiconductor integrated circuit for receiving and processing two or more signals in frequency bands different each other, said semiconductor integrated circuit can be made to comprise a first frequency conversion means which converts a received signal in a lower frequency band into a signal in a higher frequency band (up-converting).

Furthermore, a signal selection means which selects either a signal converted by said first frequency conversion means or a received signal in a higher frequency band can be provided.

Furthermore, a first external terminal to which a first filter circuit is connected that eliminates unnecessary frequency component from the signal selected by said signal selection means can be provided.

Furthermore, a second frequency conversion means which converts the signal that passed said first filter circuit into a signal in a lower frequency band (down-converting) can be provided.

Furthermore, a second external terminal to which a second filter circuit is connected that eliminates unnecessary frequency component from the signal converted by said second frequency conversion means.

By the method described above, number of parts in said circuit can be reduced less than that in a down-converting technique. Said technique of signal up-converting at first stage of processing permits elimination of noise caused from a signal in undesired channel involved in said received signal using an ordinary band-pass filter composed of a coil (an inductive component), a capacitor and a resistor without using a tracking filter.

Further, for a case of processing two receiving signals in L-band and VHF-band, the required frequency variation range of said PLL circuit that generates the local oscillating signal for combining purpose to convert said received signal into an intermediate frequency in said second mixer becomes 1,230.992 - 1,296.992 MHz which sits within 10% of the center frequency of said received signal, because a VHF-band signal of 174 - 245 MHz has been up-converted into an L-band signal of 1,452 - 1,492 MHz. Therefore, it becomes possible to reduce the power consumption in the semiconductor integrated circuit for receiving signal processing, because the required variation range of the controlling voltage for the voltage controlled oscillator (VCO) in said PLL circuit becomes an extent 0 (zero) to merely approximately 3 V.

Hereunder, preferred embodiments for carrying out the present invention are described referring to schematical drawings attached hereto.

### BRIEF DESCRIPTION OF DRAWINGS

FIG. 1 shows a block diagram to show an example wherein the present invention is embodied for a receiving signal processing circuit used in a DAB system terminal equipment which handles signals in two frequency bands, L-band and VHF-band.
FIG. 2(a) to (d) show explanatory illustrations to show a signal frequency distribution at each part of the receiving signal processing circuit given in Figure 1.
FIG. 3(A) shows an approximate circuit composition diagram in a PLL circuit.
Fig. 3(B) shows a circuit diagram in an embodiment of a voltage controlled oscillator (VCO).
FIG. 4 shows a circuit diagram to show another embodiment of a receiving signal processing circuit in the present invention.
FIG. 5 shows a circuit diagram to show another different embodiment of a receiving signal processing circuit in the present invention.
FIG. 6 shows a circuit diagram to show a further different embodiment of a receiving signal processing circuit in the present invention.
FIG. 7 shows a block diagram to show an embodiment of receiving signal processing circuit composition having a down-converting technique which was studied in an earlier stage of devising in the present invention.
FIG. 8 shows an explanatory illustration to show a signal frequency distribution at each part of the receiving signal processing circuit given in Figure 7 wherein an ordinary type filter is used as a band-pass filter to be placed at the front-end of a second mixer.
FIG. 9 shows an explanatory illustration to show a signal frequency distribution at each part of the receiving signal processing circuit given in Figure 7 wherein a tracking filter is used as a band-pass filter to be placed at the front-end of the second mixer.

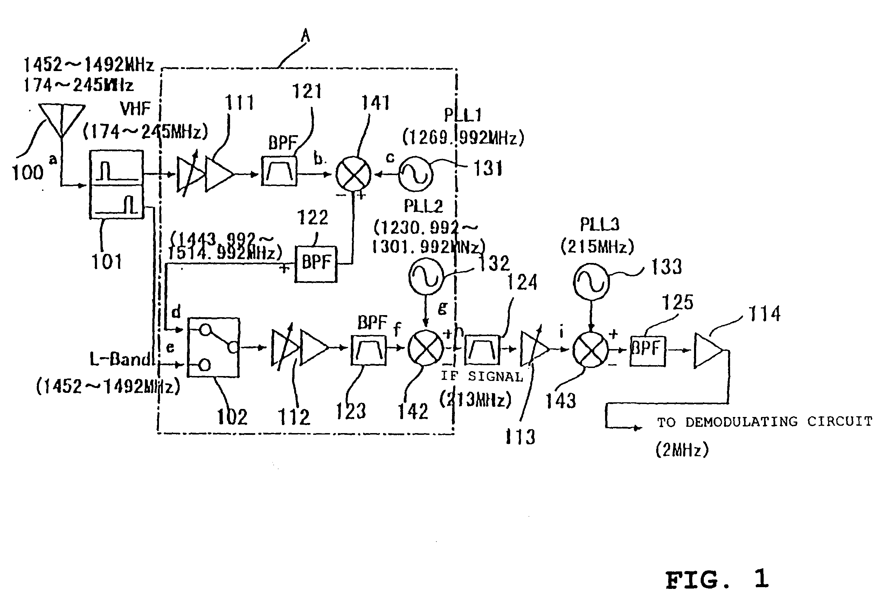

Figure 1 shows an embodiment in a signal processing circuit for a DAB system terminal equipment that receives and reproduces an L-band signal and VHF-band signal.

In Figure 1, reference numeral 101 indicates a deplexer (separation network) which separately extracts a VHF-band signal of 174 - 245 MHz and an L-band signal of 1,452 - 1,492 MHz form a received signal received by an antenna 100; reference numeral 102 indicates a signal switcher; reference numerals 111, 112 and 114 indicate LNAs (low-noise amplifiers); reference numeral 113 indicates an automatic gain controlled (AGC) amplifier; reference numerals 121, 122, 123, 124 and 125 indicate band-pass; reference numerals 131, 132 and 133 indicate PLL (phase-locked loop) circuits which generate local oscillating signals of predetermined frequencies as local oscillators; and reference numerals 141, 142 and 143 indicate mixers which combine said received signal and local oscillating signals generated from said PLL circuits.

Said deplexer (branching filter) 101 is composed of, for example, a band-pass filter that passes a desired VHF-band signal and a band-pass filter that passes a desired L-band signal. Said low-noise amplifiers 111 and 112 are public known signal amplifiers designed to have a gain of approximately 13 dB comprising transistors, capacitors, inductors, and resistors wherein said transistors have a low NF (noise factor) index i.e.; a low noise performance in a high frequency. Among said band-pass filters 121 - 125, only the filter 124 placed at the rear-end of said mixer 142 is a SAW filter having a pass-band approximately 1 MHz using a surface acoustic wave device, and other filters 121 - 123 and 125 are either ordinary band-pass filters composed of inductors (coils), capacitors, and resistors, or narrow-band band-pass filters composed of a surface acoustic wave devices.

Said mixers 141 - 143 output a superposed signal produced by overlaying two signals: one signal on a frequency equivalent to the sum-frequency of the received signal frequency and the local oscillating signal frequency, and the other signal on a frequency equivalent to the differential-frequency between these two frequencies. Thereafter, said band-pass filters 122, 124 and 125 respectively placed at the rear-end of said mixers 141, 142 and 143 selectively pass one of said signals either on said sum-frequency or on said differential-frequency. More concretely, the pass-band of each of said filters 122, 124 and 125 is set so that the band-pass filter 122 may pass the signal on said sum-frequency and the band-pass filters 124 and 125 may pass the signal on said differential-frequency.

In the system shown in Figure 1, said PLL circuit 131 is composed to generate a local oscillating signal of 1,269.992 MHz; VHF-band signals of 174 - 245 MHz received by said antenna 100 and separated by said deplexer (branching filter) 101 is amplified by said low-noise amplifier 111, processed in said band-pass filter 121 for noise elimination, and up-converted in a first mixer 141 by being combined with said local oscillating signal of 1,269.992 MHz generated from said PLL circuit 131.

The first mixer 141 outputs a superposed signal produced by overlaying two signals: one signal on 1,443.992 - 1,514.992 MHz equivalent to the sum-frequency of the received signal frequency and said local oscillating signal frequency, and the other signal on 1,095.992 - 1,024.992 MHz equivalent to the differential-frequency between these two frequencies. And then, only said converted signal of 1,443.992 - 1,514.992 MHz close to L-band is sent out to the signal switcher 102 passing through said band-pass filter 122.

Said VHF-band signal thus up-converted is selected by said signal switcher 102 for amplification by said low-noise amplifier 112 followed by processing in said band-pass filter 123 for noise elimination, and is converted into an intermediate frequency signal (IF signal) of 213 MHz in a second mixer 142 by being combined with said local oscillating signal of 1,230.992 - 1,301.992 MHz which is generated from said PLL circuit 132. Thereafter, said intermediate frequency signal is processed in a narrow-band band-pass filter 124, like a SAW filter, for elimination of both noise and other interfering signals followed by processing in a third mixer 143 for conversion into a signal of 2 MHz by being combined with a local oscillating signal of 215 MHz generated from said PLL circuit 133, then is sent out to a demodulating circuit.

While the oscillating signal frequencies of PLL circuits 131 and 133 are fixed, the oscillating frequency of the PLL circuit 132 is variable. This comes from that, because of a narrowness of the pass-band of said SAW filter 124 placed rear-end of said second mixer 142, the oscillating signal frequency generated from said PLL circuit 132 must be variable so that all the received signal in a variety of channel frequencies may be converted into said intermediate frequency signal of 213 MHz. The local oscillating signal frequency at which said PLL circuit 132 should be locked is fed from a microcomputer or the like, which controls each part of the circuit according to a mode based on a input signal or other informing signals for a channel desired to be selected; wherein such computer or the like is not shown in referred Figures for simplicity.

Said signal switcher 102 selectively sends out a signal to said low-noise amplifier 112 selecting either the signal of the VHF-band signal up-converted in said first mixer 141 or the signal of the L-band signal separated by said deplexer (branching filter) according to a mode selected by user's manipulation of a channel selection button or the like on a operating panel. In this embodiment, said band-pass filter 122 is an ordinary filtering circuit comprising an inductor (a coil), a capacitor, and a resistor.

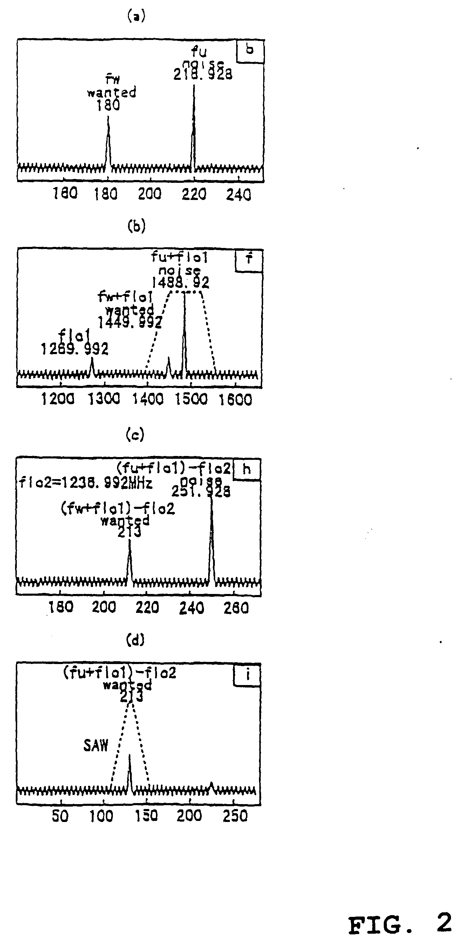

In the up-converting technique in said embodiment, a frequency separation between desired signals and undesired signals becomes relatively large. That is: suppose for example, that a signal of fw on 180 MHz in 180 MHz-band channel is desired for selection wherein a signal fu on 218.928 MHz on other channel exists as shown in Figure 2(a), and that these two signals fw and fu are up-converted into two signals as shown in Figure 2(b) i.e.; one on frequency of 1,449.992 MHz fw+flo1 and the other on 1,488.92 MHz fu+flo1 by said first mixer 141 based on a local oscillating signal flo1 1,269.992 MHz, further that these up-converted signals are sent out to said second mixer 142. Even under this situation, signals (fw+flo1)-fbo2 and (fu+flo1)-flo2 after conversion in said second mixer 142 based on a local oscillating signal flo2 of 1,236.992 MHz have frequencies 213 MHz and 251.928 MHz respectively, as shown in Figure 2(c). This shows a wide frequency separation, which can obviously be known from a comparison thereof with a frequency distribution for a case of after down-conversion by said second mixer 142 as shown in Figure 8(c).

As a result of this, as shown in Figure 2(d), only the signal (fw+flo1)-flo2 in desired channel can be passed with the noise of (fu+flo1)-fbo2 caused from signals in other channel being eliminated using the narrow-band SAW filter 124 placed at the rear-end of said second mixer 142. Therefore, it is not necessary to use a tracking filter, a parts-congesting device that is required in the down-converting technique shown in Figure 7, as said band-pass filter 123 place at the front-end of said second mixer 142 for elimination of a noise caused from a signal in other channel; using an ordinary filter composed of an inductor (a coil), a capacitor, and a resistor is enough. In Figure 2, reference signs b, f, h and i appear in upper-right corners of each Figure (a) - (d) show corresponding signals among signals marked as a - i in the system given in Figure 1.

Though there is no intention for giving particular limitation in embodiment, in a part of circuit encircled with a dot-dash line in Figure 1 a circuit portion other than said band-pass filters 121 - 125 can be composed on one semiconductor chip as a semiconductor integrated circuit for receiving signal processing. Further, amplifiers 113 and 114, said PLL circuit 133, and said third mixer 143 can be included in said integration on the same chip.

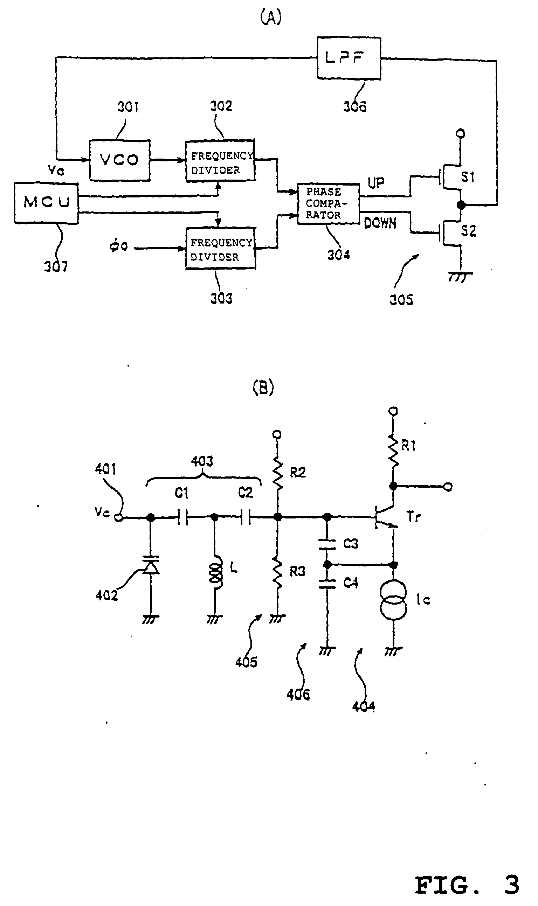

Figure 3(A) shows an approximate circuit composition diagram in a PLL circuit, and Figure 3(B) shows an embodiment of a voltage controlled oscillator (VCO ) circuit diagram.

Said PLL circuit is comprised of a voltage controlled oscillator (VCO) 301; a divider 302 which divides the signal produced said voltage-controlled oscillator 301; a divider 303 which divides a reference clock φ0 having a high accuracy fed from an oscillator like a quartz oscillator; a phase comparator 304 which compares the phase between two signals each produced by said dividers 302 and 303; an up-down controlling circuit 305 which is comprised of series-configuration MOSFETs S1 and S2 that are respectively switched by an UP signal for phase lead and a DOWN signal for phase lag generated from said phase comparator 304 depending on the phase status; and a low-pass filter 306 which averages the output potential from said up-down controlling circuit 305; wherein the output voltage from said low-pass filter 306 is fed to said voltage controlled oscillator (VCO) 301 as a controlling voltage Vc. Said PLL circuit 132, of which frequency is variable, is controlled in its locking frequency by controlling dividing-ratios 1/N and 1/M of said dividers 302 and 303 respectively using a signal generated from a microcomputer 307 or the like.

Said voltage controlled oscillator (VCO) 301 is comprised of, as shown in Figure 3(B), a variable capacitance diode 402 that functions as a variable capacitor being interposed between a control terminal 401, to which said controlling voltage Vc is applied, and a grounding point; a resonance circuit 403 composed of a coil L, and capacitors C1 and C2; an output stage 404 composed of a series connection of a resistor R1, a transistor Tr and a constant current source Ic; a biasing stage 405, comprising series resistances R2 and R3, which gives said transistor Tr a biasing point; and a stabilizing means 406 composed of a feedback capacitor C3 which is interposed between the base and emitter of said transistor Tr, and a capacitor C4 which is interposed between the emitter of the transistor Tr and a grounding point; wherein an oscillating signal having the specific frequency determined by the characteristics of said resonance circuit 403 is generated from the collector of said transistor Tr.

In this embodiment circuit, a change in the controlling voltage Vc varies the capacitance of the variable capacitance diode 402, thereby a resonance frequency in the resonance circuit 403 is varied to ensure said PLL circuit to oscillate a frequency corresponding to the controlling voltage Vc.

A system like the one shown in Figure 7, wherein a down-converting technique is used, requires that the oscillating frequency in said PLL circuit must widely range for an extent of 212.9 - 283.9 MHz with a variation rate of approximately 30% of its center frequency, wherein said PLL circuit generates a local oscillating signal for combining with the received signal in said second mixer 142. To allow this, said system further requires that the controlling voltage Vc for said voltage controlled oscillator (VCO), shown in Figure 3(B), must be capable of being swept for an extent 0 (zero) to as much as 8 V. Contrary to this, in the embodiment system that uses an up-converting technique, it is enough to ensure the oscillating signal frequency of said PLL circuit 132 having a frequency variation range of 1,230.992 - 1,301.992 MHz. This means that the ratio of frequency variation to the center frequency of a signal in said embodiment can be squeezed into approximately 5%, a greatly smaller ratio than that in down-converting technique 27%, maintaining the variation range still the same width as in the down-converting technique 71 MHz.

Therefore, varying the controlling voltage for said voltage controlled oscillator (VCO) in said PLL circuit for an extent 0 (zero) to 3 V is adequate. Consequently, for the semiconductor integrated circuit wherein a signal processing circuit is composed as given in said embodiment, supplying externally thereto a voltage of 3 V would be enough requiring no internal voltage boosting circuit which is required in a semiconductor integrated circuit for receiving signal processing that uses the down-converting technique. Thus, the handheld electronic device like a portable telephone can be operated on a low voltage battery when the invented circuit is embodied therein, and power consumption in said device could be reduced. These finally mean that the signal processing circuit that uses an up-converting technique having the circuitry like an embodiment-circuitry is a much suitable semiconductor integrated circuit for use in a handheld electronic device.

In addition, while a SAW filter 124 placed at the rear-end of said second mixer 142 in said down-converting technique should pass a signal of 38.9 MHz, said SAW filter 124 in said up-converting technique in this embodiment may pass a signal on higher frequency of 213 MHz. This means that said filter can be small-sized. Because the electrode distance in a SAW filter is determined proportionally to the wavelength of a signal to be passed therethrough, i.e. the higher the signal frequency therein becomes, the smaller the device thereof can be designed. Thereby, the system that uses this circuitry achieves small-sizing in its device.

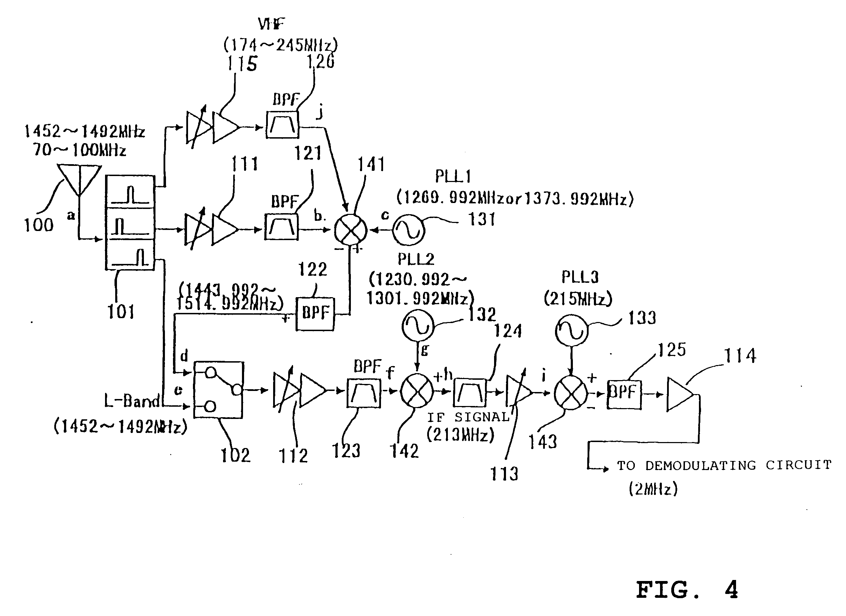

In said embodiment, the explanation dealt with the signal processing circuit for use in a DAB system terminal equipment that handles signals in two frequency bands L-band and VHF-band, it is, however, further possible to apply said circuitry to the case that handles signals in more than two frequency bands. In this case, it is enough for proper functioning to provide the circuit with a low-noise amplifier 115 which amplifies the signal in a third frequency band and a band-pass filter 126 in parallel with, as shown in Figure 4, the low-noise amplifier 111 which amplifies the VHF-band signal and the band-pass filter 121, making the PLL circuit 131 to be a variable-frequency oscillator like the PLL circuit 132 so that the receiving signal amplified by said low-noise amplifier 115 may be up-converted into an L-band signal.

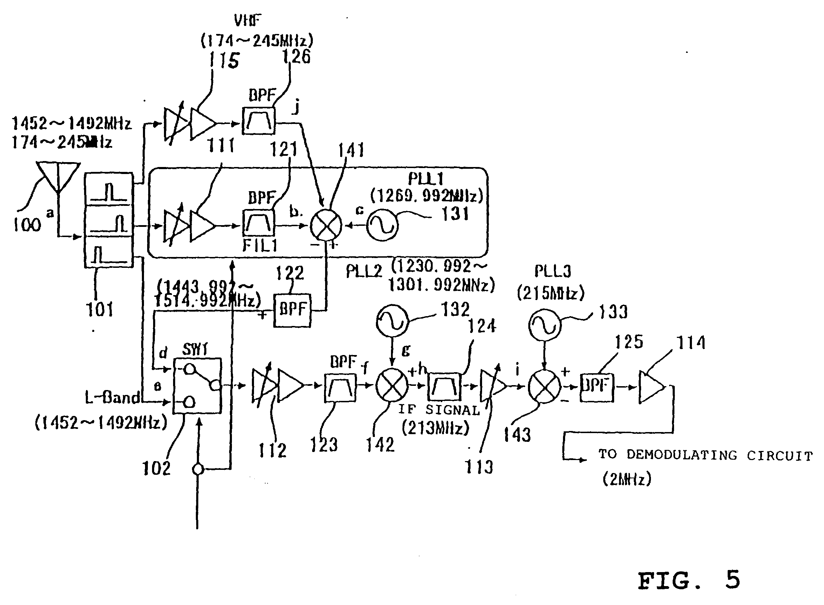

Figure 5 shows another different embodiment.
Said embodiment has a circuitry that the circuit block in said VHF-band signal up-converting circuit comprising, as shown in Figure 1 as an embodiment, a low-noise amplifier 111, a band-pass filter 121, a PLL circuit 131, and a mixer 141 is provided with a power source switch or a current switch that are controlled by the signal for controlling said signal switcher 102. More concretely, said circuitry has a function that a power source voltage or a current fed to the VHF-band signal up-converting circuit is cut when an L-band signal is selected by the signal switcher 102. According to this embodiment, the power consumption therein can be largely reduced, because a power source switch or a current feeding switch for the VHF-band signal upconverting circuit becomes being allowed for switched off when an L-band signal is selected for processing, wherein said up-converting circuit for a VHF-band signal is not required to work.

There concretely described the present invention referring to embodiments as above. It is however evident that there is no reason to restrict the present invention only within referred embodiments and further modification of the referred embodiment is still obviously possible without departing from the gist of the claimed extent of the present invention. That is, in said embodiment, a signal processing circuit which handles signals in two frequency bands L-band and VHF-band was as an explanatory example. However, the signal therein to be received and processed is not limited to a signal only in two frequency bands L- band and VHF-band, but a signal in UHF-band 300 - 3,000 MHz and a signal in 1.9 GHz band for PHS (Personal Handyphone System) or PCS (Personal Communication System) can also be acceptable for the circuit by the present invention.

The present invention is still applicable to a semiconductor integrated circuit for receiving signal processing to be used not only in a portable telephone but in an electronic equipment like a personal computer and an audio appliance both provided with a data communication function.

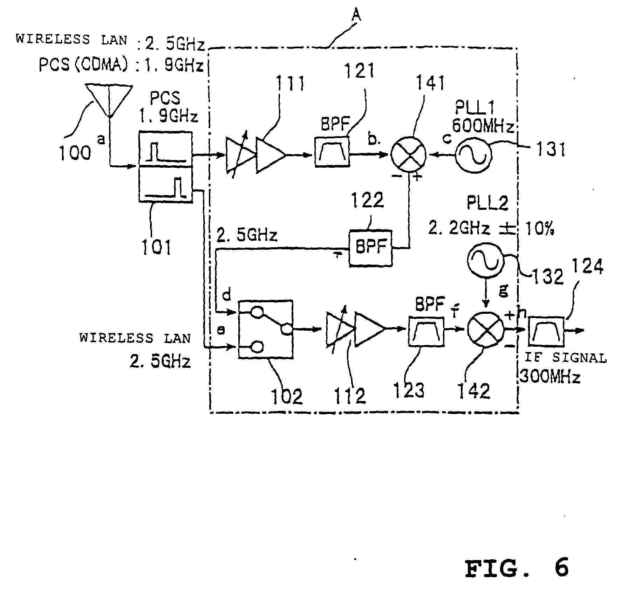

Figure 6 shows a further different embodiment.
This embodiment is an embodiment of a signal processing circuit that is capable of receiving and processing both signals in wireless LAN (Local Area Network) system on 2.5 GHz and in PCS system on 1.8 GHz. This circuit has the same circuitry and behavior as the circuit given in Figure 1 except handling frequency. This means that the function of this circuitry is self-explanatory.

A brief explanation on the effects obtainable from a typical embodiment of the present invention disclosed in the present application is as follows.

That is, even under a requirement that a signal processing is to handle receiving signals in two or more frequency bands on one common circuit, the invention is able to realize an integrated semiconductor circuit for receiving signal processing which is capable of composing a small-sized electronic equipment with a reduced number of parts therein, and further to realize the same with low power consumption without requirement for a high voltage power source.

### EXPLANATION OF REFERENCE SYMBOLS

100 Antenna
101 Deplexer (branching filter)
102 Signal Switcher
111, 112, 113, 114, 115 LNA (Low-noise amplifiers)
121, 122, 123, 124, 125, 126 Band-pass filters
131, 132, 133 PLL circuits
141, 142, 143 Mixers
301 Voltage controlled oscillator (VCO)
302, 303 Dividers
304 Phase comparator
305 Up-down controller
306 Low-pass filter
307 Microcomputer
401 Control terminal
402 Variable capacitance diode
403 Resonance circuit
404 Output stage
405 Biasing stage
406 Stabilizing means

## Claims

1. An integrated semiconductor circuit for receiving signal processing which receives and processes two or more receiving signals each respectively in a frequency band different from one another comprising
a first frequency conversion means which converts a received signal in a first frequency band into a signal on a second frequency band higher than said first frequency band;
a signal selection means (102) which selects either a signal converted by said first frequency conversion means or a signal in a third frequency band higher than said first frequency band; and
a second frequency conversion means which converts a signal passed through a first filter circuit into a signal in a pre-determined frequency band.

2. An integrated semiconductor circuit for receiving signal processing according to claim 1, characterized by
a first external terminal to which said first filter circuit is connected that eliminates a pre-determined frequency component from the signal selected by said signal selection means (102); and
a second external terminal to which a second filter circuit is connected that eliminates a pre-determined frequency component from the signal converted by said second frequency conversion means.

3. An integrated semiconductor circuit for receiving signal processing as claimed in Claim 1 or 2, wherein said first frequency conversion means is comprised of
a first oscillator circuit (131) which generates an oscillating signal having a higher frequency than the frequency of said received signal frequency in said first frequency band but lower than the frequency of said received signal in said second frequency band, and
a signal output device which outputs a signal on a frequency equivalent to a sum-frequency of signals produced by combining said oscillating signal generated from said first oscillator circuit (131) and said received signal in said first frequency band; and
said second frequency conversion means is comprised of
a second oscillator circuit (132), and
a signal output device which outputs a signal on a frequency equivalent to a differential-frequency of signals produced by combining said oscillating signal generated from said second oscillator circuit (132) and said received signal in said first frequency band.

4. An integrated semiconductor circuit for receiving signal processing according to at least one of Claims 1 to 3, in which said second oscillator circuit (132) is a variable frequency oscillator.

5. An integrated semiconductor circuit for receiving signal processing according to at least one of Claims 1 to 4, in which
said first filter circuit is either
a band-pass filter comprising an inductive component, a capacitive component, and a resistive component, or
a narrow-band band-pass filter comprising a surface acoustic wave device; and
said second filter circuit is
a narrow-band band-pass filter comprising a surface acoustic wave device.

6. An integrated semiconductor circuit for receiving signal processing according to at least one of Claims 1 to 5, in which each of said first oscillator circuit (131) and said second oscillator circuit (132) is a phase locked loop circuit.

7. An integrated semiconductor circuit for receiving signal processing according to at least one of Claims 1 to 6, in which said received signal in said first frequency band is a VHF-band signal, and said received signal in said second frequency band is an L-band signal.

8. An integrated semiconductor circuit for receiving signal processing as claimed in Claim 7, wherein the frequency of said oscillating signal generated by said first oscillator circuit (131) is fixed, and the frequency of said oscillating signal generated by said second oscillator circuit (132) is variable.
